# EUROPEAN PATENT APPLICATION

(11) **EP 2 175 247 A1**
(43) Date of publication of application: **14.04.2010**
(21) Application number: 08790396.9
(22) Date of filing: 06.08.2008
(51) Int. Cl.: G01F 3/22, F23N 1/00, F23N 5/26

(54) **FLOW RATE METERING DEVICE, COMMUNICATION SYSTEM, FLOW RATE MEASURING METHOD, FLOW RATE MEASURING PROGRAM, FLUID SUPPLY SYSTEM, AND GAS TOOL MONITORING DEVICE**

(30) Priority: 06.08.2007 JP 2007204329; 26.02.2008 JP 2008045143
(71) Applicant: Panasonic Corporation, Kadoma-shi Osaka 571-8501 (JP); The High Pressure Gas Safety Institute of Japan, Tokyo 105-8447 (JP)
(72) Inventor: YOKOHATA, Mitsuo, Chuo-ku, Osaka-shi, Osaka 540-6207 (JP); NAKAMURA, Hirozumi, Chuo-ku, Osaka-shi, Osaka 540-6207 (JP); ASANO, Kazutaka, Chuo-ku, Osaka-shi, Osaka 540-6207 (JP); SHIRASAWA, Tadanori, Chuo-ku, Osaka-shi, Osaka 540-6207 (JP)
(74) Representative: Schwabe - Sandmair - Marx
(86) International application number: PCT/JP2008/002132
(87) International publication number: WO 2009/019870

(57) **Abstract**

To more rapidly and appropriately cope with a new event in a use circumstance of a flow rate measuring apparatus.

In a gas meter 100, an ultrasonic flow meter 104 measures a flow rate of gas flowing in a flow path 102, and a new event detecting unit 108 detects that there is a new event, which is an event which has not occurred in previous use circumstance in a use circumstance of a fluid, by using a flow rate pattern of the measured flow rate. A transmission/reception unit 110 transmits a new event signal representing the new event detected by the new event detecting unit 108 to a center apparatus 200 through a network 300. As the new event, there is an introduction of a new gas appliance in the home, abnormal use of an appliance, detection of CO occurrence, or the like.

## Description

### Technical Field

The present invention relates to a technique of detecting whether there is any variation in circumstances where a fluid is used by detecting variation in a flow rate of the fluid and notifying the outside. In addition, the invention relates to a technique of monitoring use circumstances of a plurality of gas appliances connected to gas pipes passing through gas meters.

### Background Art

There is a system which detects an accurate flow rate by detecting variation in flow rate of gas flowing in a gas flow path for each appliance which is performed by sequentially obtaining information on use patterns of new appliances appearing on the market even after a gas flow rate measuring apparatus has been produced.

In the system, flow rate measuring apparatuses provided in homes are connected to a service center through communication lines, When new gas appliances appear on the market, the contents of databases of the gas appliances are updated by the service center and the stored contents of database storage means of the flow rate measuring apparatuses are updated through communication means. Accordingly, even when new gas appliances are introduced into homes, it is always possible to accurately discriminate the appliances.

Specifically, the apparatus disclosed in the document is provided with flow rate measuring means for sequentially measuring a flow rate of a fluid flowing in a flow path over a predetermined measurement time interval, time-series data storing means for storing time-series data on the flow rate measured by the flow rate measuring means, appliances connected to the downstream side of the flow rate measuring means, database storing means for storing a representative use pattern for each appliance, appliance discriminating means for discriminating the appliances connected to the flow path downstream side by comparing the stored contents of the time-series data storing means with the stored contents of the database storing means, and communication means for performing transmission and reception of data to and from an external base station, wherein the stored contents of the database storing means can be updated through the communication means. Since the database of the use patterns of the appliances can be updated through the communication means, it is possible to accurately discriminate the appliances by sequentially obtaining information of new appliances appearing on the market (e.g., see Patent Citation 1).

As another apparatus, there is an apparatus provided with appliance discriminating means for specifying gas appliances used and connected to flow paths on the basis of flow rate information measured by the flow rate measuring means, communication means for communicating information with an external information detecting means, a gas meter provided with gas cutoff means for cutting off gas when an abnormality is detected, information detecting means for detecting a fire, a combustible fluid, or a toxic fluid, notification means for notifying the outside of the abnormality, and an alarm provided with communication means for communicating detection information with the gas meter, wherein at least any one of the gas meter and the alarm is provided with countermeasure selecting means for selecting a countermeasure method by judging a circumstance on the basis of two pieces of information from the gas meter and the alarm, and a safe operation is managed in cooperation with each other. Since it is possible to select a countermeasure method whether or not to cut gas by judging the circumstance using both pieces of information from the gas meter and the alarm, erroneous cutting off of the gas is suppressed, thereby improving convenience (e.g., see Patent Citation 2).
Patent Citation 1: JP-A-2007-24753
Patent Citation 2: JP-A-2007-225129

### Disclosure of Invention

### Technical Problem

However, in the above-described configurations, after the database on the service center side is updated, the information of the flow rate measuring apparatus is updated for the first time. Accordingly, even at the point in time when introducing new gas appliance products are newly launched on the market, when the updating of the database is delayed and the old version of the database remains, the old version of the appliance information of the flow rate measuring apparatus remains and the flow rate measuring apparatus has no information of the new gas appliances. Therefore, it is difficult for the flow rate measuring apparatus to discriminate the new gas appliances,

Typically, a gas company or a gas supplier, or the like periodically and directly visits user's homes and performs safety checks and interpret new appliances. Accordingly, when the interval between the periodical visits is long, and even when new gas appliances are introduced, it is difficult to accurately interpret the circumstances of gas use and to discriminate the gas appliances.

Patent Citation 1 copes with the introduction of new gas appliance products newly launched on the market, but does not cope with introduction of new appliances which have not hitherto occurred in the home even when the appliances have been launched on the market and also in cases where particular events occur.

The apparatus disclosed in Patent Citation 2 judges the circumstance using both pieces of information of the gas meter and the alarm, and selects the countermeasure method on whether or not to cut off the gas. The apparatus accurately interprets the abnormal circumstance on the basis of the abnormality information detected by the alarm or the abnormal flow rate information detected by the gas meter and reduces the erroneous cutoff to improve convenience. On the contrary, there is no disclosure of the technical concept of installing the alarm to improve safety levels in regard to the use of appliances, and to improve convenience by reflecting the use condition such as periods of continual use of the appliances.

An object of the invention is to maintain a proper use circumstance of a fluid by notifying an external monitoring apparatus or the like when any new event has occurred in the use circumstance of the flow rate measuring apparatus.

Another object of the invention is to provide a gas appliance monitoring apparatus in which a gas meter having a gas flow rate measuring function and cutoff function is provided with communication means, appliance information detected by the gas meter or installation information of an alarm is reported to a center, appliance management for each customer home or inspection period management of the alarm are collectively performed, and use condition of appliances according to a safety level based on the installation information of the alarm is set.

### Technical Solution

A flow rate measuring apparatus is provided with a flow rate measuring unit that measures a flow rate of a fluid flowing in a flow path, a new event detecting unit that detects when there is a new event, which has not occurred in previous use circumstance in the use circumstance of a fluid, by using a flow rate pattern of the flow rate measured by the flow rate measuring unit, and a transmission unit that transmits a new event signal representing the new event detected by the new event detecting unit to the external reception apparatus.

According to the invention, since the occurrence of the new event is transmitted to the external reception apparatus, the measures with which the new event under the use circumstance of the flow rate measuring apparatus can be more appropriate.

The new event detecting unit may detect as the new event that a new appliance which is an appliance using a fluid has been introduced. In this case, the new event detecting unit may detect that a new appliance which is an appliance using a fluid has been introduced when a new flow rate pattern is obtained a plurality of times. The new event detecting unit may detect that a new appliance which is an appliance using a fluid has been introduced when a new flow rate pattern is continuously or discontinuously obtained a plurality of times.

According to the invention, the introduction of the new appliance is appropriately interpreted, and it is easy to perform appliance management.

The new event detecting unit may detect abnormal use of an appliance using a fluid as the new event. In this case, the new event detecting unit may detect the abnormal use of the appliance using the fluid when an abnormal use flow rate pattern is obtained a plurality of times. The new event detecting unit may detect the abnormal use of the appliance using the fluid when the abnormal use flow rate pattern is continuously or discontinuously obtained a plurality of times.

According to the invention, the abnormal use of the appliance is appropriately interpreted, and it is easy to perform replacing of appliances, prevention of accidents, and the like.

A communication system is configured by connecting the flow rate measuring apparatus to the reception apparatus through a network. A CO sensor that detects CO is provided, and the new event detecting unit may generate the new event signal when the combination between a flow rate pattern of a specific appliance and the CO detection ON-signal is obtained a plurality of times.

According to the invention, leakage of CO is appropriately interpreted, and it is easy to prevent accidents.

The invention includes a flow rate measuring method including the steps of measuring a flow rate of a fluid flowing in a flow path, detecting that there is a new event which has not occurred in previous use circumstance in a use circumstance of a fluid from a flow rate pattern of the measured flow rate, and transmitting a new event signal representing the new event to an external apparatus. The invention includes a flow rate measuring program for prompting a computer controlling the flow rate measuring apparatus to execute the steps. The invention includes a fluid supply system using the flow rate measuring apparatus, the communication system, the flow rate measuring means or the flow rate measuring program.

A gas appliance monitoring apparatus monitors a use circumstance by discriminating a gas appliance connected to a pipe passing through a gas meter and is capable of communicating with an alarm. The gas meter includes flow rate measuring means for measuring a gas flow rate, a gas cutoff valve that cuts a gas flow path at an abnormal time, a control circuit that performs a predetermined process on the basis of the measurement result of the flow rate measuring means and outputs flow rate information or appliance information, alarm installation information acquiring means for acquiring installation information of various alarms, and communication means for transmitting the flow rate information of the control circuit, the appliance information, or the installation information of the alarm installation information acquiring means to the outside. The communication means assigns and transmits an identification code classified according to the appliance information when the control circuit outputs new appliance information, and assigns and transmits an identification code classified according to the installation information output from the alarm installation information acquiring means.

According to the invention, as a result of the flow rate measurement, for example, when an appliance which has not hitherto occurred is specified by the appliance discrimination based on the time-series flow rate pattern, or when a use pattern which has not hitherto occurred is specified, appliance information, to which the identification code classified according to the specific event is assigned, is generated and reported to the center through the communication means. Accordingly, it is possible to securely interpret the installation situation of gas appliance used in the home for each customer, breakdown of appliances, occurrence of abnormality at the center, it is possible to centrally perform the overall management of events related to the gas appliance for each customer in a 24-hour system, and thus it is possible to perform the secure and safe management of the appliances.

In addition to the appliance management, the information of the alarm can be acquired, particularly, the alarm installation information acquiring means for acquiring the installation information of the alarm is provided, alarm disposition information, to which an identification code classified according to types of alarms at the time of installing the alarm is assigned, is generated, and the alarm disposition information is reported to the center through the communication means. Accordingly, it is possible to surely interpret the installation situations, the inspection period information, or the abnormality occurrence information of the alarms installed in the customer homes at the center, the safety level for the management of the gas appliance of the customer becomes clear, and thus it is possible to promptly find the abnormal event and to further improve convenience by setting the use condition of the appliance to correspond to the safety level.

According to the invention, the gas meter having the flow rate measuring function and cutoff function is used as an information relay, and it is possible to reasonably ensure a safety function in the home and to promote the wide use of a safety system.

As the alarm installation information acquiring means, there may be provided notification means for giving notices on the basis of inspection period notice information received through communication means.

According to the invention, when the alarm is installed in the home, and the alarm installation information acquiring means acquires the identified alarm installation information, the acquired information is reported to the center, and then the center side periodically transmits the inspection period information to the alarm installation information acquiring means. Accordingly, the alarm installation information acquiring means receiving the inspection period information notifies the customer through the notification means, it is possible to securely perform legal inspection of various types of alarms, and it is possible to ensure a high safety level in homes.

The alarm installation information acquiring means may output a signal for varying a notification method according to the inspection period notice information, and may restrict a period of continual use of the appliance, when a completion signal of an inspection work is not input even when an inspection expiration period has expired.

According to the invention, after the alarm installation information is reported to the center, a notification method is changed to notice signals which differ as the inspection period information transmitted from the center gets closer to the inspection expiration period, thereby notifying that it is getting closer to the inspection expiration period. When the inspection work is not performed even when the inspection expiration period has past, the use condition of the appliance is restricted, and thus it is possible to ensure the minimum safety level in homes.

As the control circuit, there may be provided process mode executing means for executing a predetermined process mode according to the installation information output from the alarm installation information acquiring means.

According to the invention, when the alarm installation information is acquired from the various alarms installed in the home, the control circuit provided in the gas meter determines the safety level in the home according to the installation information and sets the use condition of the appliance on the basis of the determination result. Accordingly, it is possible to use the appliance while ensuring the minimum safety level and ensuring convenience.

The process mode executing means may allow an upper limit of the period of continual use of the appliance to be extendable when there is an alarm installation signal.

According to the invention, as the use condition of the appliance based on the safety level, the upper limit of the permissible period of continual use of the appliance is set, the safety level in the home is determined, for example, by the type or the number of alarms, the upper limit of the permissible period of continual use of the appliance is extended on the basis of the determination result, it is possible to improve convenience, it is possible to detect that an abnormality has occurred from the continuous use by the alarm, and thus it is possible to ensure the minimum safety level.

The process mode executing means may allow the upper limit of the period of continual use of the appliance to be further extendable when there is a plurality of alarm installation signals.

According to the invention, the home where a large number of alarms are installed is determined to be in a high safety level, the upper limit of the permissible period of continual use of the appliance is extended to improve convenience, it is possible to detect that an abnormality has occurred from the continuous use by the alarm, and thus it is possible to ensure the minimum safety level.

The process mode executing means may set an extension time of the upper limit of the period of continual use of the appliance according to the identification code of the alarm installation signal.

According to the invention, when the alarm installation signal is acquired, the upper limit of the permissible period of continual use that is the use condition of the appliance is set on the basis of the extending time set according to the identification code assigned according to the types of the alarms. Accordingly, it is possible to set the appropriate appliance use condition according to the safety level in the home, and thus it is possible to ensure convenience and safety when using the appliance.

The control circuit may discriminate an appliance or a specific event from the flow rate pattern measured by the flow rate measuring means, and may output appliance information to which the identification code is assigned at the time of specifying an appliance or an event which has not hitherto occurred.

According to the invention, the flow rate measured by the flow rate measuring means, for example, a periodically measured momentary flow rate is stored in time series, an appliance or specific event is discriminated on the basis of the flow rate pattern in a predetermined period, it is determined that a new appliance has been introduced or an event different from the normal use has occurred when the appliance or event cannot be specified, the appliance information to which the identification code is assigned is output, the appliance information is reported to the center through the communication means. Accordingly, it is possible to securely interpret the installation situation of the gas appliance used in the home for each customer, the breakdown of the appliance, the occurrence of the abnormality at the center, it is possible to centrally perform the overall management of the events related to the gas appliance for each customer in a 24-hour system, and thus it is possible to perform the secure and safe management of the appliances.

The control circuit may output appliance information to which an identification code is assigned by determining that a new appliance has been installed or a specific event has occurred, when a new flow rate pattern is obtained a plurality of times.

According to the invention, the introduction of the new appliance or the occurrence of the specific event is discriminated by the appearance of the flow rate patterns of a plurality of times, Accordingly, it is possible to perform discrimination with a high probability, and thus it is possible to manage the appliances with little error.

### Advantageous Effects

According to the invention, it is possible to appropriately cope with the new event under the use circumstance of the flow rate measuring apparatus.

According to the invention, it is possible to securely interpret the installation situation of gas appliance used in the home for each customer, breakdown of appliances, occurrence of abnormality at the center, it is possible to centrally perform the overall management of events related to the gas appliance for each customer in a 24-hour system, and thus it is possible to perform the secure and safe management of the appliances.

It is possible to surely interpret the installation situations, the inspection period information, or the abnormality occurrence information of the alarms installed in the customer homes at the cetner, the safety level for the management of the gas appliance of the customer becomes clear, and thus it is possible to promptly find the abnormal event and to further improve convenience by setting the use condition of the appliance to correspond to the safety level.

The gas meter having the flow rate measuring function and cutoff function is used as the information relay, and it is possible to reasonably ensure the safety function in the home and to promote the wide use of the safety system.

### Brief Description of Drawings

[Fig. 1] Fig. 1 is a block diagram illustrating a gas supply system including a gas meter according to an embodiment of the invention.
[Fig. 2] Fig. 2 is a graph illustrating a flow rate pattern after having used a new gas appliance C once.
[Fig. 3] Fig. 3 is a graph illustrating a flow rate pattern after having used the new gas appliance C a plurality of times.
[Fig. 4] Fig. 4 is a graph illustrating an example after having used the new gas appliance C a plurality of times and measuring an erroneous flow rate pattern.
[Fig. 5] Fig. 5 is a graph illustrating an example in which a plurality of flow rate patterns representing abnormal use of gas appliances are continuously shown.
[Fig. 6] Fig. 6 is a graph illustrating an example in which a normal flow rate pattern is shown among a plurality of flow rate patterns representing abnormal use of gas appliances.
[Fig. 7] Fig. 7 is a graph illustrating a relationship between flow rate patterns of gas appliances and ON-OFF signals of a CO sensor, and an example in which a CO sensor signal is necessarily turned on with a flow rate pattern of a specific gas appliance.
[Fig. 8] Fig. 8 is a graph illustrating a relationship between flow rate patterns of gas appliances and ON-OFF signals of a CO sensor, and an example in which a CO sensor signal is not necessarily turned on with a flow rate pattern of a specific gas appliance.
[Fig. 9] Fig. 9 is a diagram illustrating a communication configuration of a gas appliance monitoring apparatus according to a fourth embodiment of the invention.
[Fig. 10] Fig. 10 is a diagram illustrating a communication configuration with various alarms in the gas appliance monitoring apparatus.
[Fig. 11] Fig. 11 is a block diagram illustrating a process control of safety information in the gas appliance monitoring apparatus.
[Fig. 12] Fig. 12 is a diagram illustrating appearance and constituent components of a gas meter in the gas appliance monitoring apparatus.
[Fig. 13] Fig. 13 is a diagram illustrating an inner configuration of the gas meter.
[Fig. 14] Fig. 14 is a block diagram illustrating a configuration of a control circuit board of the gas meter.
[Fig. 15] Fig. 15 is diagram illustrating a communication configuration of the gas appliance monitoring apparatus and a specific terminal device.
[Fig. 16] Fig. 16(a) is a diagram illustrating a rate information display form in the specific terminal device, and Fig. 16(b) is a diagram illustrating a recovery information display form in the specific terminal device.
[Fig. 17] Fig. 17 is a block diagram illustrating a configuration of a control circuit of the gas appliance monitoring apparatus.

### Explanation of References

- 2:: GAS METER
- 2c:: GAS CUTOFF VALVE
- 10: CONTROL CIRCUIT BOARD
- 10a:: CONTROL CIRCUIT
- 10b:: INFORMATION STORING MEANS
- 10c:: COMMUNICATION SWITCHING MEANS
- 10f:: IDENTIFICATION CODE DISCRIMINATING MEANS
- 10g:: GROUP ASSORTING MEANS
- 10h:: PROCESS MODE EXECUTING MEANS
- 10i:: COMMUNICATION CHANNEL SELECTING MEANS
- 10j:: ALARM PROCESS MODE SETTING MEANS
- 11:: WIRELESS MODULE
- 11a:: WIDE AREA COMMUNICATION WIRELESS MODULE
- 11b, 11c, 11d:: AREA COMMUNICATION WIRELESS MODULE
- 12:: SPECIFIC TERMINAL DEVICE
- 12a:: TV
- 12b:: MOBILE PHONE
- 14:: BASE STATION
- 15a:: CENTRAL MONITORING CENTER
- 15b: GAS SUPPLIER
- 17:: FLOW RATE MEASURING MEANS (FLOW RATE MEASUREMENT PROCESSING MEANS)
- 25:: HOME SAFETY DEVICE
- 26:: ALARM INSTALLATION INFORMATION ACQUIRING MEANS
- 100:: GAS METER (FLOW RATE MEASURING APPARATUS)
- 102:: FLOW PATH
- 104:: ULTRASONIC FLOW METER (FLOW RATE MEASURING UNIT)
- 106:: MEASUREMENT FLOW RATE INFORMATION STORING UNIT
- 108:: NEW EVENT DETECTING UNIT
- 110:: TRANSMISSION/RECEPTION UNIT
- 113, 114, 115:: GAS APPLIANCE
- 116:: APPLIANCE DISCRIMINATING UNIT
- 118:: APPLIANCE FLOW RATE HISTORY INFORMATION STORING UNIT
- 119:: 19: GAS PIPELINE
- 122:: FLOW PATH CUTOFF VALVE
- 200:: CENTER APPARATUS
- 300:: NETWORK
- 400:: CO SENSOR

### Best Mode for Carrying Out the Invention

Hereinafter, embodiments of the invention will be described with reference to the drawings.

### (Overall Configuration of Apparatus according to First to Third Embodiment)

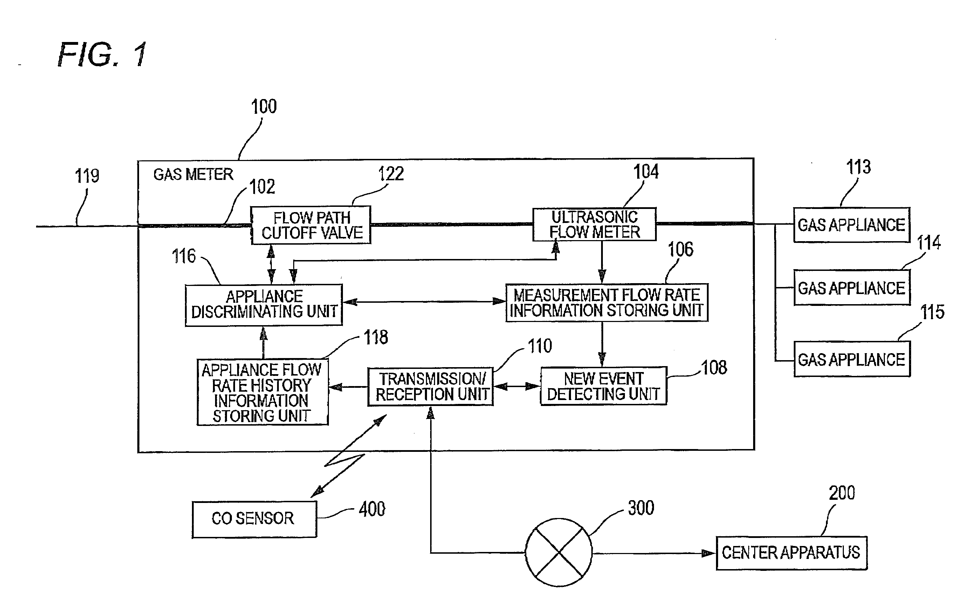

Fig. 1 shows a block diagram of a fluid supply system including a gas meter 100 as a flow rate measuring apparatus according to the embodiment, a center apparatus 200, a network 300, and a CO sensor 400. The gas meter 100 and the CO sensor are installed in a building, and they can communicate with each other, for example, by wired or wireless communication. The center apparatus 200 is provided in a gas company, a gas supplier, or a management department of a company or the like related to them, is a device for centralized management of the gas meter 100 installed in each building, and is connected to the gas meter 100 through a network 300 such as wireless, telephone lines, and the internet, so as to communicate through the network.

The gas meter 100 is provided with a flow path 102, an ultrasonic flow meter 104 as a flow rate measuring unit, a measurement flow rate information storing unit 106, a new event detecting unit 108, a transmission/reception unit 110, an appliance discriminating unit 116, and an appliance flow rate history information storing unit 118. The gas meter 100 is provided on the flow path 102, and includes a flow path cutoff valve 122 for cutting off gas in case of emergency.

The ultrasonic flow meter 104 releases an ultrasonic wave to gas as a fluid flowing in the flow path 102 at a predetermined time interval (e.g., 2 seconds) to measure the flow rate, and a typical ultrasonic flow meter may be used. The measurement flow rate information storing unit 106 stores target data (flow rate pattern) in which the measurement flow rate value measured by the ultrasonic flow meter 104 and the measurement time when the measurement flow rate value is measured are associated and described.

When there is any new event which has not occurred in previous use circumstance in a use circumstance of the gas meter 100, the new event detecting unit 108 detects such an event which has not occurred in the former appliance by comparing it with the event occurring by the former appliance in the appliance discriminating unit 116 and generates a new event signal representing the new event. By transmitting such a new event signal to an external monitoring apparatus or the like, it is possible to keep an appropriate use circumstance of a fluid.

The transmission/reception unit 110 transmits and receives various kinds of information to and from the other external apparatuses, and any communication means and communication method is not limited irrespective of whether it is wired or wireless communication. The transmission/reception unit 110 serves as a transmission unit that transmitting the new event signal generated by the new event detecting unit 108 to the external apparatus such as the center apparatus 200 managed by the gas company, the gas supplier, or the like through the network 300 such as the wireless network or the internet.

The CO sensor 400 detects CO when CO (carbon monoxide) leaks from gas appliances 113 to 115, and transmits a CO detection signal representing the detection of CO to the transmission/reception unit (serving as a reception unit receiving the CO detection signal) 110 by wireless communication (or wired communication). Of course, a transmission/reception unit for the CO detection signal may be provided separately, and the signal may be transmitted to the transmission/reception unit 110. The transmission/reception unit 110 transmits the received CO detection signal to the new event detecting unit 108.

The appliance discriminating unit 116 discriminates gas appliances using gas as a fluid with reference to the flow rate patterns stored in the measurement flow rate information storing unit 106. In this case, the appliance discriminating unit 116 compares the flow rate patterns with gas appliance characteristic flow rate history information stored in advance in the appliance flow rate history information storing unit 118 for each gas appliance, and discriminates the gas appliances using gas from the similarities.

The gas meter 100 is connected to a gas pipeline 119 on the upstream side, and is connected to various gas appliances 113, 114, and 115 such as a gas table, a fan heater, and a floor heater on the downstream side.

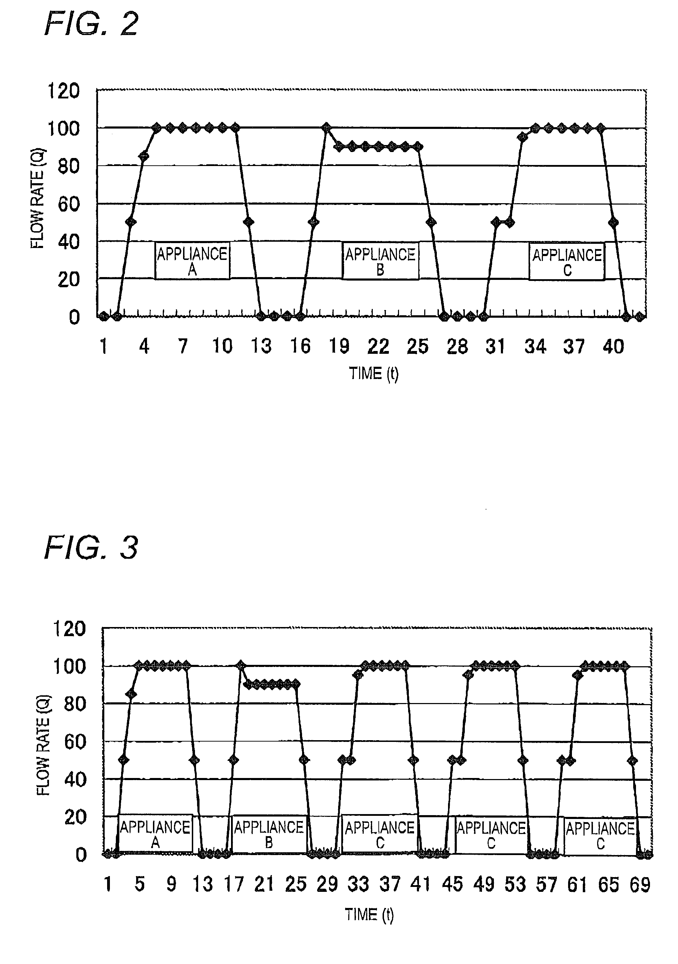

The gas meter 100 according to the embodiment detects that there is a new event, which has not occurred in the previous use circumstance in the use circumstance of the fluid, by using the flow rate pattern of the flow rate measured by the ultrasonic flow meter 104 that is the flow rate measuring unit, and notifies the external center apparatus 200. In the embodiment, as shown in the graph of Fig. 2 and the graphs below, the ultrasonic flow meter 104 measures flow rates (absolute flow rate) Q measured with a predetermined time interval (e.g., 2 seconds), the measured flow rates are stored in the measurement flow rate information storing unit 106, and the flow rate patterns are generated as shown in the graphs. The new event is detected on the basis of such generated flow rate patterns.

### (First Embodiment)

In the embodiment, the gas meter 100 detects as the new event that the new appliance which is the gas appliance using gas has been introduced from the generated flow rate patterns. In the invention, the "new (gas) appliance" also includes an appliance introduced for the first time to the use circumstance of the gas meter 100 such as in the home, as well as a new appliance (so-called new product) launched on the market. Fig. 2 shows the flow rate patterns when using a gas appliance A, a gas appliance B, and a gas appliance C as the gas appliances 113, 114, and 115. For example, when only the gas appliance A and the gas appliance B are being used and a new gas appliance other than the gas appliances is not being used, a new flow rate pattern is not obtained. Accordingly, the new event detecting unit does not generate a new event signal.

Then, it is assumed that the using of the gas appliance C which is the new gas appliance is started. As shown in the graph of Fig. 2, the flow rate pattern of the gas appliance C is different from the flow rate patterns of the gas appliance A and the gas appliance B. Thus, the new event detecting unit 108 detects as the new event that the gas appliance C which is the new appliance has been introduced, generates a new event signal, and transmits the new event signal to the transmission/reception unit 110. The transmission/reception unit 110 transmits the new event signal to the center apparatus 200 through the network 300. The center apparatus 200 reports the new event signal to the management department by a predetermined reporting means, the management department interprets that any new event has occurred and interprets that the new gas appliance has been introduced, and can provide a predetermined measure for management of the gas appliance, for example, updating information of the appliance flow rate history information storing unit 118 of the gas meter 100. The center apparatus 200 serves as a reception apparatus receiving the new event signal, and a communication system is configured of the gas meter 100 and the reception apparatus.

In the example, the new event detecting unit 108 generates the new event signal when the flow rate pattern of the new gas appliance C has been obtained once. However, by using only the one flow rate pattern, there is a concern that a new event signal may be generated which is an erroneous operation and erroneous detection caused by noises or the like, even though the new gas appliance has not been introduced. In the example shown in the graph of Fig. 3, the new event signal is generated when the flow rate pattern of the new gas appliance C is obtained three times. Accordingly, it is possible to reduce the probability of erroneous operations and erroneous detections. The necessary number of times that there is the flow rate pattern is not limited to the three times, but may be set to a predetermined plurality of times.

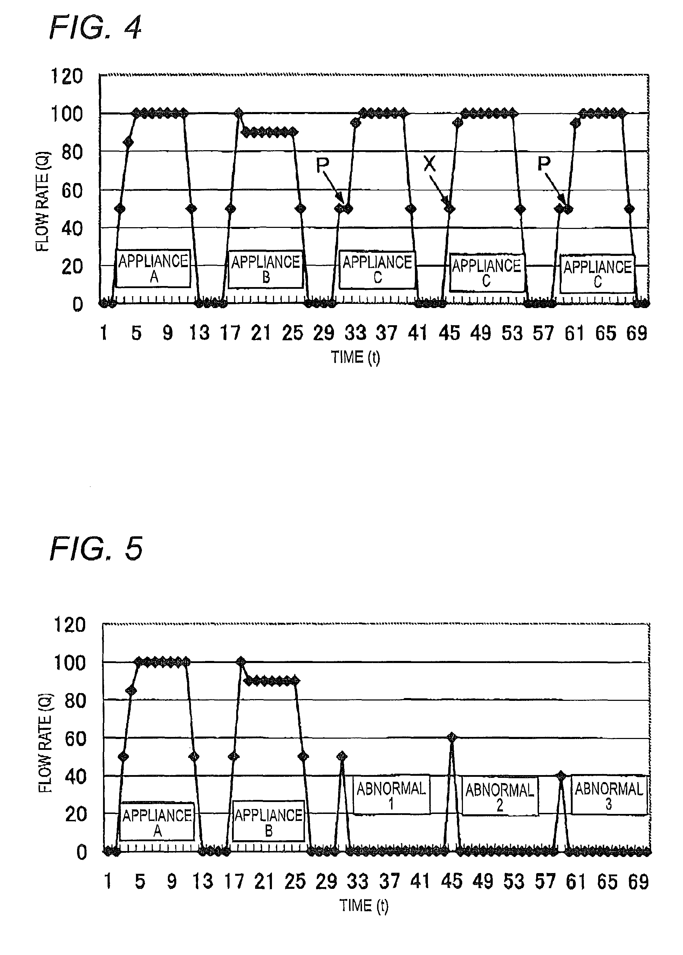

The example shown in Fig. 3 is an example in which the flow rate pattern of the new gas appliance is continuously obtained a plurality of times, that is, any other pattern is not mixed among the flow rate patterns of the gas appliance C. However, even when such a flow rate pattern of the new gas appliance is not continuously obtained, the new event signal may be generated. For example, in the example shown in Fig. 4, the flow rate pattern of the gas appliance C should be continuously obtained three times as in the original version, but, in the measurement of the flow rate in the second flow rate pattern, the ultrasonic flow meter 104 cannot catch all the parts where variation of the flow rate is insufficient such as a slow ignition point P by the timing of sampling. As described above, even when the generation of the flow rate pattern of the gas appliance C is discontinuous, the new event detecting unit 108 detects that the new gas appliance C has been introduced, on the basis of the discontinuous flow rate patterns of a plurality of times, and may generate the new event signal.

### (Second Embodiment)

In the embodiment, the gas meter 100 detects as the new event the abnormal use of the gas appliance using gas from the generated flow rate patterns. The "abnormal use" means an aspect of use different from a normal aspect, such as an abnormal operation at the time of breakdown of the gas appliance, and an improper operation performed by an operator. Since the flow rate pattern at the time of abnormal use is different from the flow rate pattern at the time of normal use, the gas meter 100 can detect the abnormal use.

The Fig. 5 shows the flow rate patterns when any gas appliance is abnormally used, after using the gas appliance A and the gas appliance B. The graph shown in Fig. 5 is an example in which abnormal flow rate patterns with a narrow and longitudinal pulse shape clearly different from the flow rate pattern when using the normal appliance, which are similar to each other (Abnormal 1 to Abnormal 3). When the flow rate patterns with such a pulse shape continue for a plurality of times, the new event detecting unit 108 determines that an abnormality has occurred in any gas appliance (ignition to gas is not normal, etc.), detects the abnormal use as the new event, generates the new event signal, and transmits the new event signal to the transmission/reception unit 110. The transmission/reception unit 110 transmits the new event signal to the center apparatus 200 through the network 300. The center apparatus 200 reports the new event signal to an operator by predetermined reporting means, the operator interprets that any new event has occurred and interprets the abnormal use of the gas meter 100, and then, the operator can provide a predetermined measure such as the checking of the gas meter 100.

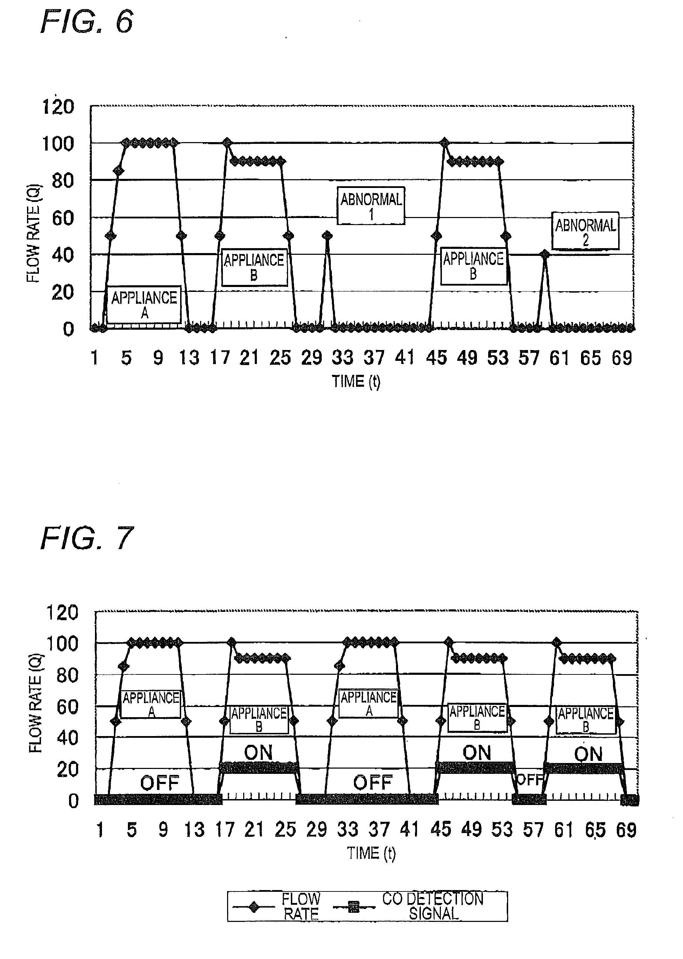

The example shown in Fig. 5 is an example in which the flow rate patterns of the abnormal use are continuously obtained a plurality of times, that is, any other pattern is not mixed among the abnormal use flow rate patterns. However, even when such abnormal use flow rate patterns are not continuously obtained, the new event signal may be generated. For example, in the example shown in Fig. 6, the flow rate pattern of the gas appliance B is presented among two abnormal use flow rate patterns. As described above, even when the flow rate patterns of the abnormal use is discontinuous, the new event detecting unit 108 detects the abnormal use on the basis of the abnormal use flow rate patterns of a plurality times, and may generate the new event signal.

In the example, when the flow rate patterns of the abnormal use are obtained a plurality of times, the new event detecting unit 108 generates the new event signal. However, when the probability of erroneous detection is low, the new event detecting unit 108 may generate the new event signal on the basis of one abnormal use flow rate pattern.

### (Third Embodiment)

In the embodiment, the gas meter 100 detects occurrence of CO as the new event on the basis of combination of the generated flow rate patterns and CO detection detected by the CO sensor 400. Fig. 7 shows a situation where the CO detection signal from the CO sensor 400 is turned on or off in the course of using the gas appliance A and the gas appliance B.

As can be seen from the graph of Fig. 7, the CO detection signal is necessarily turned on (there is occurrence of CO) when using the gas appliance B. When the combination of the flow rate pattern of the gas appliance B and the CO detection signal continues at the same time, the new event detecting unit 108 determines that the gas appliance B is generating CO, detects the CO occurrence as the new event, generates the new event signal, and transmits the new event signal to the transmission/reception unit 110. The transmission/reception unit 110 transmits the new event signal to the center apparatus 200 through the network 300. The center apparatus 200 reports the new event signal to the management department by predetermined reporting means, the management department interprets that any new event has occurred and interprets that CO has been generated, and it is possible to provide a predetermined measure, such as the reporting of an alarm to the home.

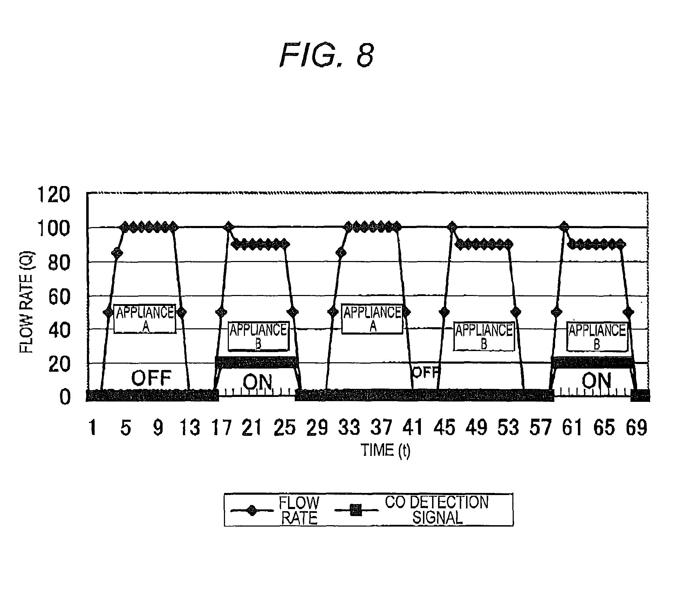

The example shown in Fig. 7 is an example in which the flow rate pattern of the gas appliance B and the CO detection ON signal are generated necessarily at the same time. However, even when the flow rate pattern of the gas appliance B and the CO detection ON signal are not obtained so as to necessarily overlap with each other, the new event signal may be generated. For example, in the example shown in Fig. 8, the CO detection signal is turned off (there is no CO occurrence) in the flow rate pattern of the second gas appliance B. As described above, even when the occurrence of the combination of the flow rate pattern of the predetermined gas appliance and the CO detection ON signal is discontinuous, the new event detecting unit 108 detects the CO occurrence and may generate the new event signal on the basis of the occurrence of the combination of a plurality of times.

In the example, when the combination of the flow rate pattern of the predetermined gas appliance and the CO detection ON signal is obtained a plurality of times, the new event detecting unit 108 generates the new event signal. However, when the possibility of erroneous detection is low, the new event detecting unit 108 may generate the new event signal on the basis of one combination.

In the example, the transmission/reception unit 110 transmits the new event signal to the center apparatus through the network 300. The transmission aspect may be based on wired or wireless communication. As described above, the gas meter 100 and the center apparatus 200 are connected to each other by the network 300, and thus it is possible to promptly notify a person concerned thereto of the new event. When the prompt notification is not required, the new event signal may be read from the transmission/reception unit 110 using a device carried by an inspector, whenever the inspector visits the home.

As described above, the gas meter 100 detects that there is the new event, which has not occurred in the previous use circumstance in the use circumstance of the fluid, by using the flow rate patterns of the fluid, and notifies the external center apparatus 200 of the event through various means. The operator of the center apparatus interprets that any new event has occurred, and can provide a predetermined measure. Accordingly, it is possible to appropriately cope with the new event under the use circumstance of the gas meter 100. By using the wired communication or wireless communication such as the network 300, it is possible to promptly transmit the new event to the center apparatus.

To embody such a flow rate measuring method, a program for executing the steps of the flow rate measuring method of the invention is stored in the new event detecting unit 108 or a computer (operation device) (not shown). The invention includes a fluid supply system including a supply source of a fluid (gas) using the flow rate measuring apparatus, the flow rate measuring method, and the program executed on the computer of the invention.

In the embodiment, the introduction of the new appliance, the abnormal use of the appliance, and the CO occurrence have been exemplified as the new event. However, the new event is not limited to such events, and includes everything which it is preferable to report to the center apparatus 200.

The case of using the ultrasonic flow meter has been described above, but it is clear that the same advantage can be obtained even in another momentary flow rate, measuring apparatus.

### (Fourth Embodiment)

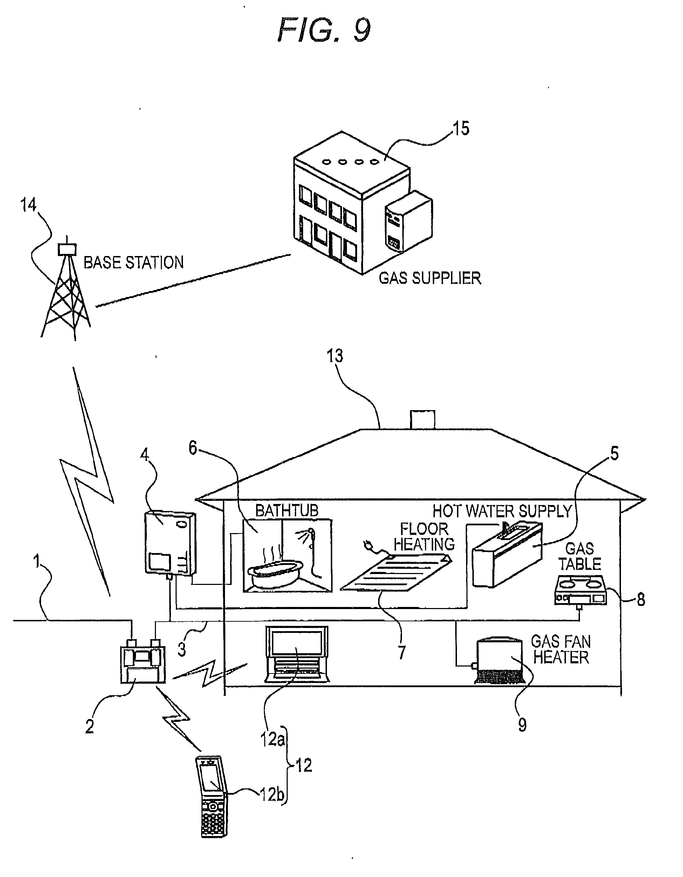

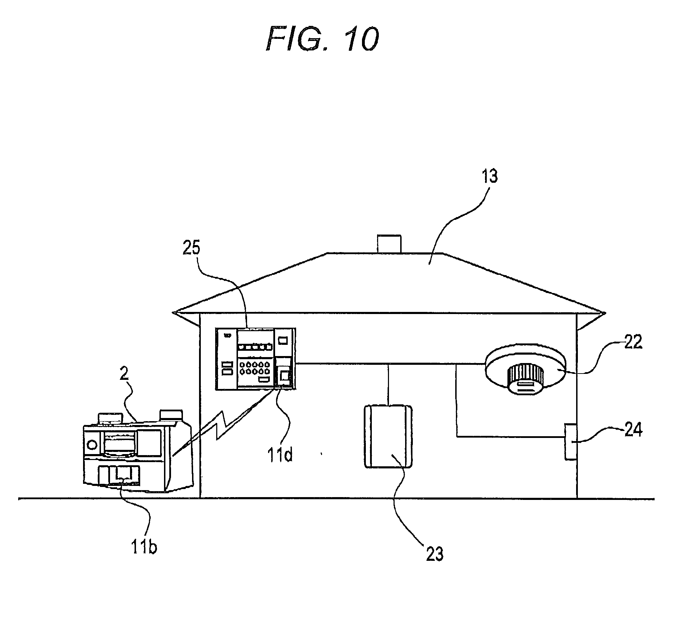

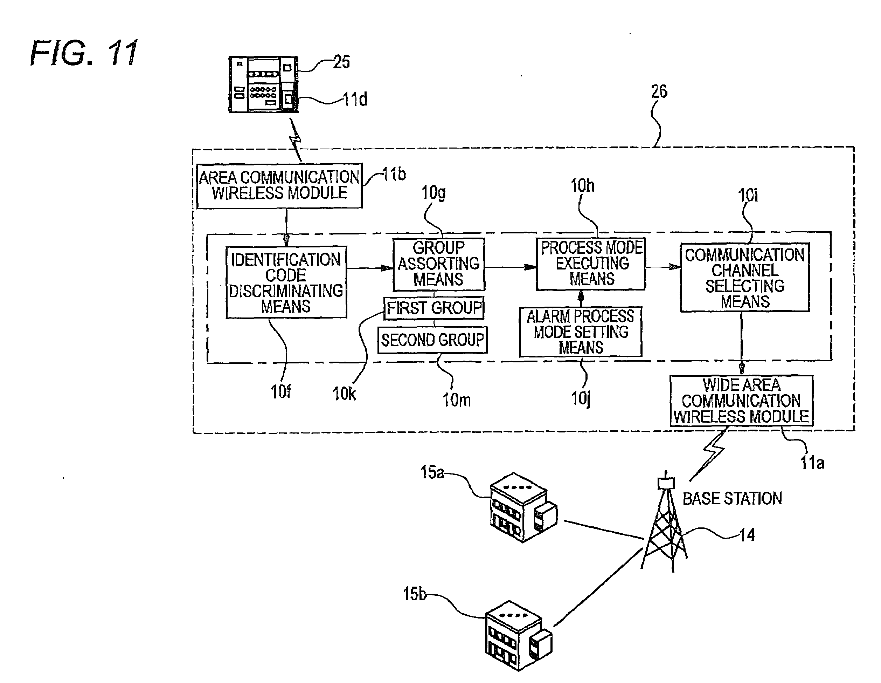

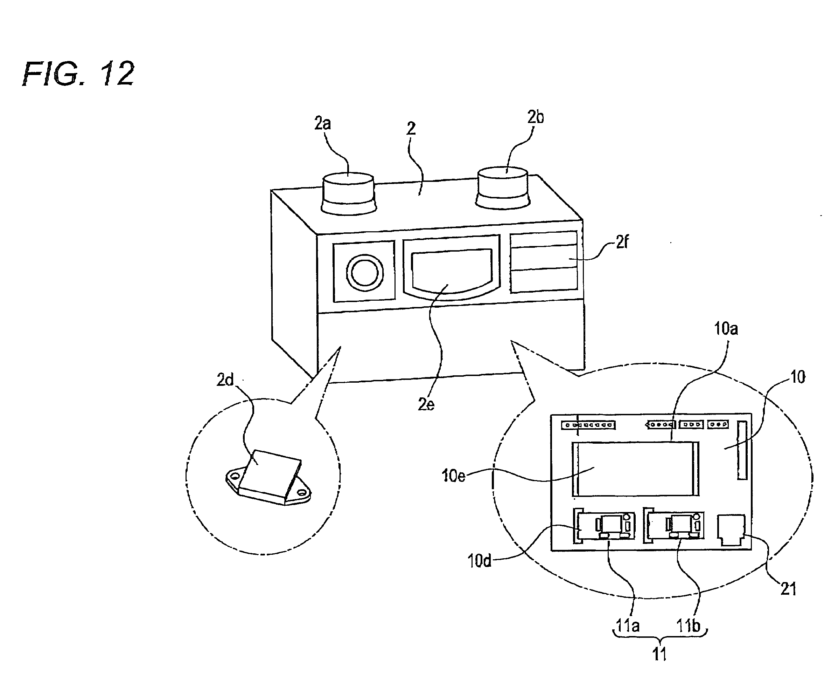

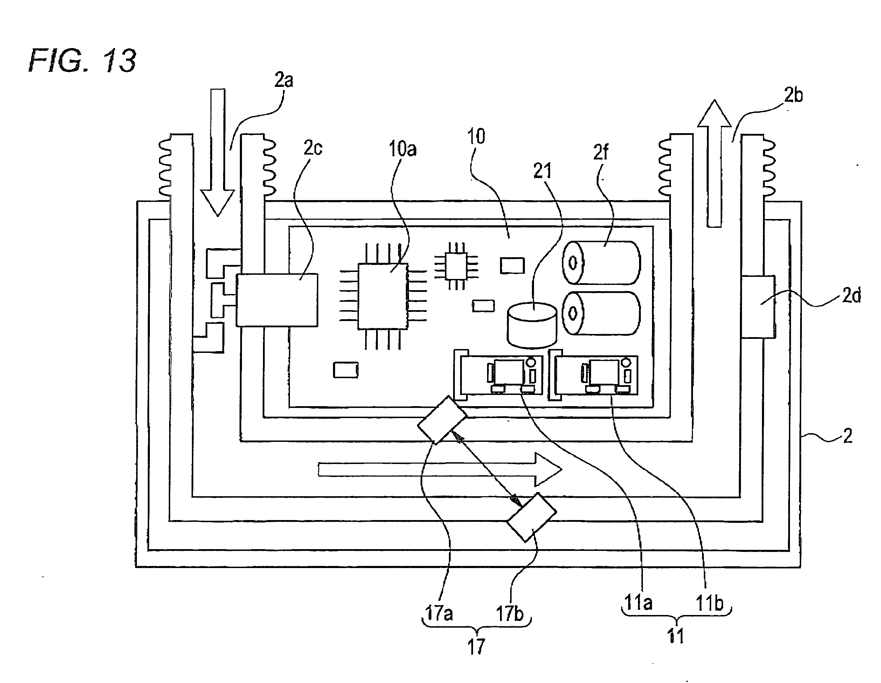

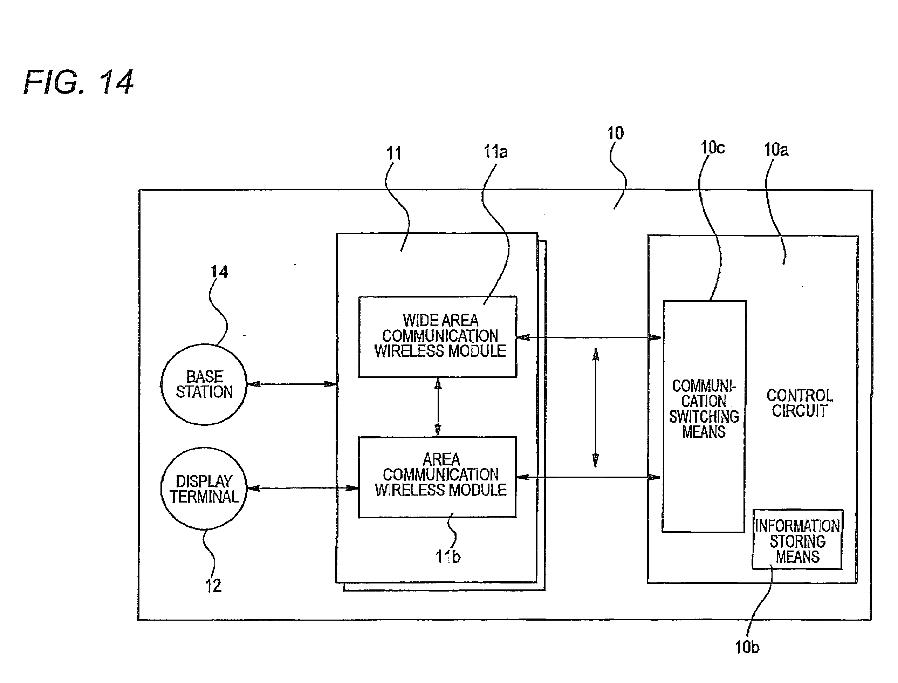

Fig. 9 is a diagram of an overall communication configuration of a gas meter and an central monitoring center according to the fourth embodiment, and a customer's house, Fig. 10 is diagram illustrating a communication configuration with various alarms in the gas appliance monitoring apparatus, Fig. 11 is a block diagram illustrating a process control of safety information in the gas appliance monitoring apparatus, Fig. 12 is a diagram illustrating an appearance and constituent components of the gas meter in the gas appliance monitoring apparatus, Fig. 13 is a diagram illustrating an inner configuration of the gas meter, and Fig. 14 is a block diagram illustrating a configuration of a control circuit board of the gas meter.

Communication functions of a plurality of gas appliances passing through a gas meter 2 and connected to pipes and the gas meter 2 will be described with reference to Fig. 9.

The gas meter 2 is installed at an inlet part of a gas supply pipe 1 in the home, and gas is supplied to locations branched from a gas pipe 3 passing through the gas meter 2, where various gas appliances used in the home are installed. For example, a gas boiler 4 is installed outdoors, hot water generated in the gas boiler 4 is supplied to a hot water tap 5 in a kitchen, a bathroom 6 where a bathtub or a shower are installed, a floor heater 7 installed in a living room or the like by using a water pipe, thereby forking various use types.

Indoors, the gas is supplied to a gas table 8 installed in a kitchen or a gas fan heater 9 installed in a living room or a bedroom, and is appropriately used as necessary.

When the installed gas appliances are used to consume the gas, the amount of gas used is measured by the gas meter 2, and data thereof is accumulated and stored for each predetermined period, A predetermined information process is performed on the data stored in the gas meter 2 on the basis of a regular data request instruction from a gas supplier 15b, and then the data is transmitted to a customer 13 and the gas supplier 15b, as information of the gas rate, the amount of gas used, a discount service provided by the gas supplier 15b, and the like.

In the gas consumption caused by the use of the gas appliances, a momentary flow rate value measured at a predetermined internal is stored in a time series, and a flow rate pattern for a predetermined period is generated. The used appliances are specified or it is determined whether or not abnormal use has occurred, on the basis of the generated flow rate pattern. The result thereof is transmitted to the central monitoring center 15a or the gas supplier 15b.

As an example of the transmission means, as shown in Fig. 12, a wireless module 11 integrally assembled with a control circuit board 10 constituting a control device built in the gas meter 2 is used, the wireless module 11 is detachably mounted on the control circuit board 10 by a connector 10d, a gas meter without a communication function where the wireless module 11 is not mounted or a gas meter having a communication function where the wireless module 11 is mounted can be arbitrarily selected, the gas meter 2 can be the same for both cases, and thus it is possible to use the gas meter 2 irrespective of whether there is a communication function.

With the detachable configuration of the wireless module 11, even in the case of having the communication function, when the wireless module acquiring a communication standard is mounted, a main body of the gas meter does not need to acquire a standard as a communication device, and the gas meter can be relatively freely changed without restriction in the case of changing the gas meter.

As shown in Fig. 10, the wireless module 11 includes a wide area communication wireless module 11 a having a plurality of communication channels with a frequency band of, for example, 200 MHz or another frequency band different from a telephone line to communicate with a base station 14 capable of communicating with the central monitoring center 15a or the gas supplier 15b by a private line, and an area communication wireless module 11b with a specific low power wireless communication frequency band of, for example 429 MHz or the like to communicate with a specific terminal device 12 such as a television 12a, a PC, and a mobile phone 12b in a customer's house 13, a home safety device 25 connected to various alarms installed in the home and managing together and displaying various kinds of safety information generated in the home, or an alarm in the case where a wireless module is built in the alarm. When receiving data on the amount of gas used calculated on the basis of a flow rate signal or a sensor signal, appliance discrimination data, or data from a control circuit 10a performing detection of abnormality such as earthquakes and gas leakage, various kinds of information transmitted from the central monitoring center 15a or the gas supplier 15b through the base station 14, and various kinds of information transmitted from the home safety device 25, the data is transmitted to the specific terminal device 12 such as the television 12a and the mobile phone 12b in the customer's house 13 using the area communication wireless module 11b according to the received data, for example, in the case of the gas rate, the amount of gas used, or the operation of the gas cutoff valve caused by occurrence of abnormality such as earthquakes and gas leakage are notified to the customer using various processes based on the safety information. When the safety information is transmitted from the home safety device 25, the information is received and input to the control circuit 10a.

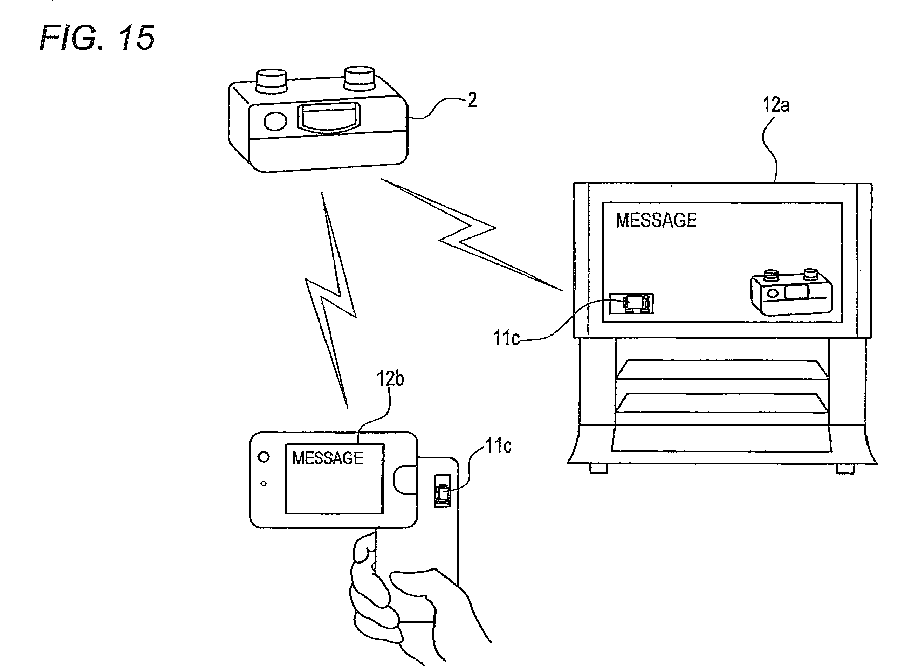

As shown in Fig. 15, a wireless module 11c with the same communication frequency band as that of the area communication wireless module 11b built in the gas meter 2 is also built in or integrally mounted on the specific terminal device 12, and thus it is possible to receive the data transmitted from the gas meter 2. By displaying the data through the screen of the television 12a or the mobile phone 12b, it is possible to directly transmit the information from the gas meter to the customer. Accordingly, it is not necessary to employ the information transmitting method of transmitting the data from the gas meter 2 to the gas supplier 15b and transmitting the information subjected to the data process in the gas supplier 15b, for example, sending a postcard to the customer by post such as rate notice, as hitherto. Therefore, it is possible to reduce the number of processes necessary for the notice work, and the occurrence of postage or the like of the postcard for notice can be stopped. As a result, the realization of rationalization of the notice work contributes to the reduction of the gas rate.

When the various kinds of information is transmitted from the gas meter 2 to the specific terminal device 12, a notice completion signal is transmitted from the area communication wireless module 11b to the wide area communication wireless module 11a, and the wide area communication wireless module 11a transmits the notice completion signal to the base station 14, thereby notifying the central monitoring center 15a or the gas supplier 15b that the information transmission to the customer is completed. In this case, it is preferable to receive a response signal from the specific terminal device 12 and to transmit the notice completion signal, it is possible to more securely transmit the information to the customer, and thus it is possible to build a reasonable information transmitting system.

As shown in Fig. 10, similarly, a wireless module 11d with the same communication frequency band as that of the area communication wireless module 11b built in the gas meter 2 is also built in or integrally mounted on the home safety device 25. Accordingly, the safety information from the various alarms can be transmitted to the area communication wireless module 11b built in the gas meter 2, and the control circuit 10a of the gas meter 2 can perform a process predetermined according to the safety information. Therefore, it can be utilized as an information relay while ensuring safety using the cutoff function of the gas meter 2. In the embodiment, the information of the various alarms is managed together by the safety device 25, and is transmitted to the gas meter 2 through the safety device 25. However, the wireless module 11d may be mounted on the various alarms, and the various kinds of information may be directly transmitted from the alarms to the gas meter 2.

Next, as a basic function of the gas meter 2, flow rate measurement processing means built in the control circuit 10a, for measuring a gas flow rate, performing a predetermined process, and outputting it as the flow rate information will be briefly described. As shown in Fig. 12 and Fig. 13, the gas meter 2 has a gas inlet 2a and a gas outlet 2b, and is provided with a cutoff valve 2c for cutting off gas at the time of abnormality in the gas flow path therebetween, and a pair of ultrasonic sensors 17 measuring a gas flow rate, and a pressure sensor 2d detecting a gas pressure is disposed on the downstream side thereof. The control circuit board 10 provided with the control circuit 10a calculating the gas flow rate by the signal output from the ultrasonic sensor 17 is disposed such that a liquid crystal display 10e faces a display unit 2e of the gas meter 2, and a battery 2f for driving the control circuit 10a is housed therein. A recovery button 2g is disposed as means for manually performing a recovery operation after the cutoff valve 2c has been operated.

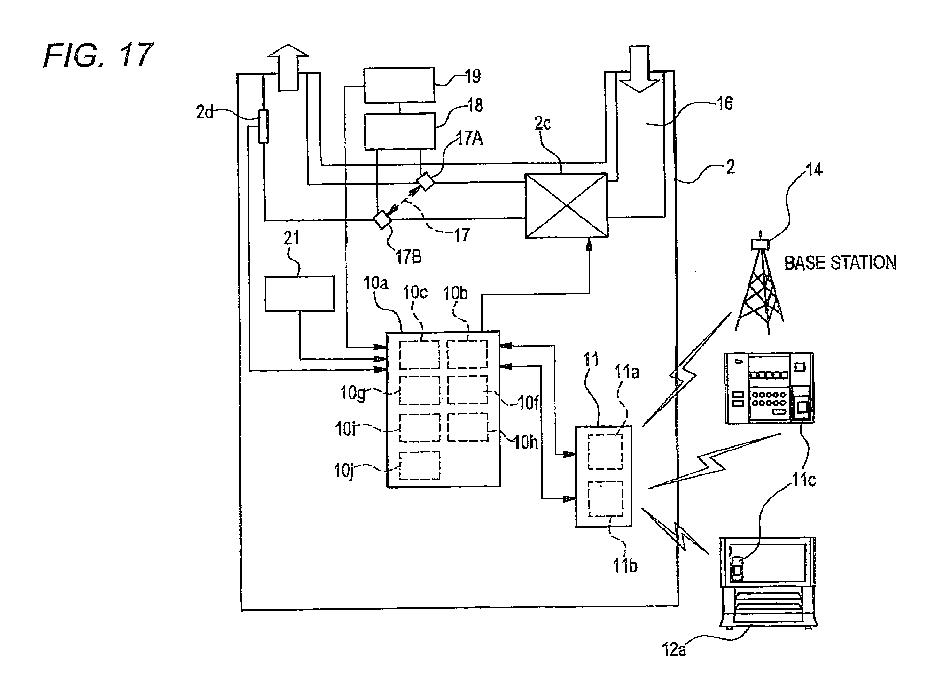

For example, as shown in Fig. 17, the flow rate measuring unit 17 measuring the gas flow rate and the control circuit 10a measure the flow rate by disposing the pair of ultrasonic sensors on the gas flow path and measuring a propagation time varied according to a flow rate of a fluid flowing in the flow path. Hereinafter, the configuration will be described. A first transceiver 17A transmitting or receiving an ultrasonic wave and a second transceiver 17B transmitting or receiving an ultrasonic wave are disposed in the flowing direction, and the transmission and the reception can be switched by a measurement control unit 18 having switching means constituting the control circuit 10a, thereby detecting a flow state of a fluid such as gas. Signals of the first transceiver 17A and the second transceiver 17B are processed to measure the flow rate. Specifically, first, the first transceiver 17A is driven by the measurement control unit 18, and the ultrasonic wave is transmitted toward the second transceiver 17B, that is, from the upstream to the downstream. The signal received by the second transceiver 17B is amplified by amplification means provided in the measurement control unit 18, the amplified signal is compared with a reference signal, a signal equal to or larger than the reference signal is detected, the transmission and reception are repeated by repetition means provided in the measurement control unit 18 predetermined times, and time values are measured by measurement means such as a time counter provided in the measurement control unit 18.

Next, the transmission and reception of the first transceiver 17A and the second transceiver 17B are switched by the measurement control unit 18 having the switching means, the ultrasonic wave signal is transmitted from the second transceiver 17B to the first transceiver 17A, that is, from the downstream to the upstream, the transmission is repeated as described above, and the time values are measured. The flow rate value is calculated from the difference in propagation time of the ultrasonic waves of the first transceiver 17A and the second transceiver 17B by signal processing means 19, considering the size of the flow path 16 or the flow state of the fluid. The calculated flow rate data is accumulated in information storing means 10b and stored as accumulation data for each predetermined period.

The cutoff valve 2c for cutting off the flow of gas at the time of abnormality or the like is provided in the flow path 16 where the flow rate measuring unit 17 is disposed. A case where the flow rate value calculated by the signal processing means 19 is abnormally large or a case where the flow rate value is detected over the normal use time is determined as an abnormality. In such a case, the gas flow path 16 is cut off by operating the cutoff valve 2c.

When an earthquake or an impact signal is input from an earthquake detecting device 21 or a signal of abnormal gas pressure is input from the pressure sensor 2d, the gas flow path 16 is cut off by operating the cutoff valve 2c through the control circuit 10a, which is reported to the center.

Next, an example of information transmission using the wireless module 11 built in the gas meter 2 will be described. First, when an inspection instruction is transmitted from the gas supplier 15b through the base station 14 in the wide area communication frequency band (e.g., 200 MHz), the wide area communication wireless module 11a built in the gas meter 2 receives the inspection instruction and the inspection instruction information is transmitted to the control circuit 10a mounted on the same board. The flow rate data measured by flow rate measuring means is accumulated in the control circuit 10a for each predetermined time, and the accumulated data or the information converted into rate data is stored in the information storing means 10b. When the inspection instruction information is input from the gas supplier 15b, the control circuit 10a transmits the flow rate accumulated data or the information converted into the rate data of the information storing means 10b is transmitted to the area communication wireless module 11b and the wide area communication wireless module 11a through the communication switching means 10c, the wide area communication wireless module 11a transmits the information to the base station 14 in the wide area communication frequency band (e.g., 200 MHz), and the inspection information is transmitted from the base station 14 to the gas supplier 15b using a private line.

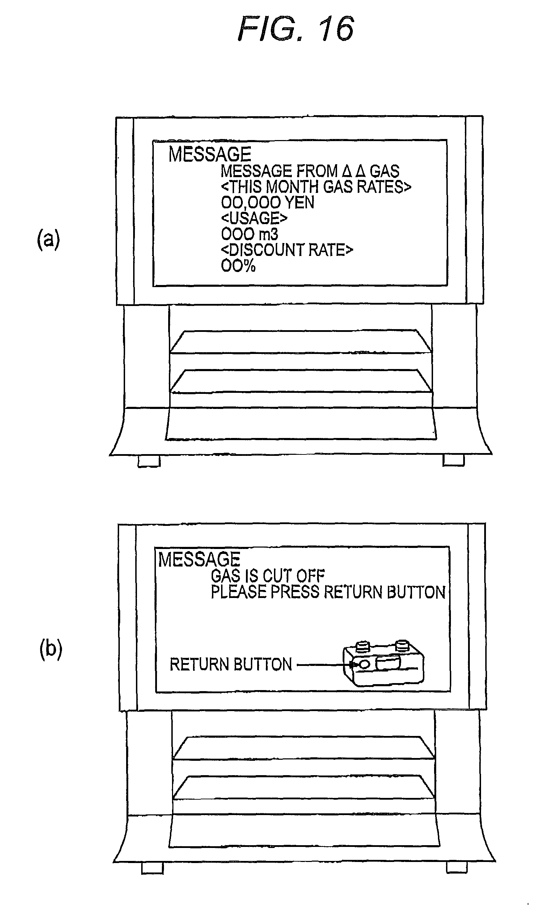

The area communication wireless module 11b transmits the information to the wireless module 11c integrally mounted on the specific terminal device 12 such as the television 12a in the specific low power wireless communication frequency band (e.g., 429 MHz), and the rate information or the amount of use is displayed on the screen, for example, as shown in Fig. 16(a). When the transmission to the specific terminal device 12 is completed, the notice completion signal is transmitted to the gas supplier 15b, thereby notifying the customer of the completion of the information transmission, as described above.

When the cutoff valve 2c operates due to an earthquake, impact, or the like, the cause thereof is found. When a recovery instruction is transmitted from the central monitoring center 15a through the base station 14 in the wide area communication frequency band (e.g., 200 MHz), the wide area communication wireless module 11a built in the gas meter 2 receives the recovery instruction, and the recovery instruction information is transmitted to the control circuit 10a mounted on the same board. When the recovery instruction information is input, the control circuit 10a transmits information on a recovery operation stored in the information storing means 10b to the area communication wireless module 11b through the communication switching means 10c. The area communication wireless module 11b transmits the information to the wireless module 11c integrally mounted on the display terminal device 12 such as the television 12a in the specific low power wireless communication frequency band (e.g., 429 MHz), and sequence of the recovery operation is displayed on the screen, for example, as described in Fig. 16(b). When the transmission to the display terminal device 12 is completed, the notice completion signal is transmitted to the central monitoring center 15a, thereby notifying the customer of the completion of the information transmission, as described above.

As described above, the control circuit 10a has the communication switching means 10c for selecting the wireless modules with the different communication frequency bands, corresponding to another party communicating according to the transmitted information. For example, in the case of the inspection instruction from the gas supplier 15, it is necessary to transmit the information stored in the information storing means 10b to the gas supplier 15 and the specific terminal device 12 on the basis of the information received by the wide area communication wireless module 11a. In this case, the wide area communication wireless module 11a with the communication frequency band of, for example, 200 MHz and the area communication wireless module 11b with the specific low power wireless communication frequency band of, for example, 429 MHz may be selected. In the case of the recovery instruction from the gas supplier 15, the information stored in the information storing means 10b may be only transmitted to the display terminal device 12. In this case, the area communication wireless module 11b with the specific low power wireless communication frequency band of, for example, 429 MHz may be selected.

The wide area communication wireless module 11a and the area communication wireless module 11b may be provided separately from each other, and may be formed of a common wireless module so that the communication frequency band may be converted into the wide area communication, frequency band and the specific low power wireless communication frequency band. In the former case, the communication switching means 10c needs to select the wide area communication wireless module 11a and the area communication wireless module 11b, and thus there is a merit in that simultaneous communication can be performed, but there is a demerit in that installation space is wide and cost thereof is high. In the later case, the communication switching means 10c needs to convert the communication frequency band according to another party communication, and thus there is a merit that installation space is small and cost thereof is low, but there is a demerit that the simultaneous communication cannot be performed and alternate communication is performed.

Next, in the gas meter having the above-described communication functions, the alarm installation information in which types of various alarms installed in the home are classified into identification codes as the alarm installation information at the initial stage is transmitted from the wireless module 11d connected to a plurality of alarms installed in the home, for example, a fire alarm 22, a CO sensor 23, and an invasion sensor 24 and built in the home safety device 25 managing together various kinds of safety information generated in the home, to the area communication wireless module 11b of the gas meter 2. The information received by the area communication wireless module 11b is subjected a predetermined signal process by alarm installation information acquiring means 26, and then is transmitted as the alarm installation information to the central monitoring center 15a or the gas supplier 15b through the base station 14 using the wide area communication wireless module 11a of the gas meter 2. By the alarm installation information communication process at the initial stage, the central monitoring center 15a or the gas supplier 15b can surely interpret the installation state, the inspection period information; and the abnormality occurrence information of the alarms installed in the home for each customer, and the safety level with regard the management of the gas appliances of each customer becomes clear. Accordingly, it is possible to promptly find the abnormal event and to further improve convenience by setting the use condition of the appliance to correspond to the safety level.

Next, the abnormality occurrence process of the alarm will be described. The safety information detected by the various alarms, to which the identification codes for classification are assigned, is transmitted to the area communication wireless module 11b of the gas meter 2. The process contents of the gas meter 2 corresponding to the safety information will be described in detail.

As shown in Fig. 11, when the identification code assigned safety information is transmitted from the wireless module 11d built in the home safety device 25 to the area communication wireless module 11b built in the gas meter 2, the safety information, is discriminated by an identification discrimination code 10f provided in the control circuit 10a constituting the alarm installation information acquiring means 26. Then, group assorting means 10g determines whether the safety information is safety information belonging to a first group 10k based on the cutoff function of, for example, the gas cutoff valve 2c, or is safety information belonging to a second group 10m other than that the first group 10k.

A process mode corresponding to the safety information sorted by the group assorting means 10g is selected from alarm process mode setting means 10j presetting processes to correspond to the various kinds of safety information, and the process is performed by process mode executing means 10h. For example, when identification code discriminating means 10f discriminates the information as the safety information detected by the fire alarm 22, the group assorting means 10g determines that the cutoff operation of the gas cutoff valve 2c is necessary, and registers the information as the safety information belonging to the first group 10k. The cutoff operation of the gas cutoff valve 2c set by the alarm process mode setting means 10j and the notice process to the central monitoring center 15a or the gas supplier 15b are executed by the process mode executing means 10h.

When the identification code discriminating means 10f discriminates the information as the safety information detected by the invasion sensor 24, the group assorting means 10g registers the information as the safety information belonging to the second group 10m, which does not need the cutoff function of the gas meter 2, and the process mode executing means 10h performs the notice process to the central monitoring center 15a set by the alarm process mode setting means 10j.

In the notice process performed by the process mode executing means 10h, when the notice destination has to be varied according to the safety information, communication channel selecting means 10i selects a necessary another party communication channel, that is, a communication frequency band, and communication with, for example, the central monitoring center 15a or the gas supplier 15b is performed using the wide area communication wireless module 11a.

When the safety information is transmitted from the home safety device 25 or a predetermined process mode is performed, the safety information is transmitted also to the specific terminal device 12 and the situation is displayed on the screen of the television 12a or the mobile phone 12b, thereby calling it to the customer's attention.

As the information communication function using the wireless module built in the gas meter 2, the flow rate pattern within a predetermined period generated in the control circuit 10 is compared with any appliance flow rate pattern stored in advance on the basis of the gas flow rate measured by the flow rate measuring means 17, the used gas appliance or the use type is discriminated on the basis of distinctive flow rate information, and the appliance information or use information to which the identification code is assigned to be capable of discriminating the appliance and the use type is transmitted to the central monitoring center 15a or the gas supplier 15b by the wide area communication wireless module 11a. Accordingly, when the appliance which has not hitherto existed or the use pattern which has not hitherto occurred is specified, the center can surely interpret the installation situation of the gas appliances used in the home of each customer, the breakdown of the appliance, and the occurrence of abnormality by the appliance information to which the identification code classified according to the specific event is assigned, the overall management related to the gas appliances of each customer can be centrally performed in a 24-hour system, and thus the secure and safe appliance management can be performed.

When the alarm installation information acquiring means 26 receives the inspection period notice information transmitted from the central monitoring center 15a or the gas supplier 15b through the wide area communication wireless module 11a, the alarm installation information acquiring means 26 can notify the notification means of the information using various mediums, using the area communication wireless module 11b.

Accordingly, when the various alarms are installed in the home and the alarm installation information acquiring means 26 acquires the identified alarm installation information, the acquired information is reported to the central monitoring center 15a or the gas supplier 15b. Then, the center side periodically transmits the inspection period information to the alarm installation information acquiring means 26. Accordingly, the alarm installation information acquiring means 26 receiving the inspection period information notifies the customer through the notification means 12, and thus it is possible to securely perform legal inspection of various types of alarms, and it is possible to ensure a high safety level in homes.

The alarm installation information acquiring means 26 outputs a signal of changing the notification method according to the inspection period notice information, When the completion signal of the inspection work is not input even when the inspection expiration period has expired, the period of continual use of the appliance may be restricted.

Accordingly, after the alarm installation information is reported to the center side 15, the notification method is changed to notice signals which differ as the inspection period information transmitted from the center side 15 gets closer to the inspection expiration period, the customer is notified through the notification means 12 using the area communication wireless module 11b, thereby notifying that it is getting closer to the inspection expiration period, When the inspection work is not performed even when the inspection expiration period has expired, the use condition of the appliance, for example, the period of continual use, is restricted, and thus it is possible to ensure the minimum safety level in homes.

The control circuit 10 may be provided with the process mode executing means 10h for executing a predetermined process mode according to the installation information from the alarm installation information acquiring means 26.

With such a configuration, when the alarm installation information is acquired from the various alarms installed in the home, the control circuit 10 provided in the gas meter 2 determines the safety level in the home according to the installation information and can set the use condition of the appliance, for example, the continuous usable time on the basis of the determination result. Accordingly, it is possible to use the appliance while ensuring the minimum safety level and ensuring convenience.

The process mode executing means 10h allows the upper limit of the period of continual use of the appliance to be extendable when there is an alarm installation signal.

With such a configuration, as the use condition of the appliance based on the safety level, the upper limit of permissible period of continual use of the appliance is set, the safety level in the home is determined, for example, by the type or the number of alarms, the upper limit of the permissible period of continual use of the appliance is extended on the basis of the determination result, it is possible to improve convenience, it is possible to detect that an abnormality has occurred from the continuous use by the alarm, and thus it is possible to ensure the minimum safety level.

The process mode executing means 10h allows the upper limit of the period of continual use of the appliance to be further extendable when there is a plurality of alarm installation signals,

With such a configuration, the home where a large number of alarms are installed is determined to be in a high safety level, the upper limit of the permissible period of continual use of the appliance is extended to improve convenience, it is possible to detect that an abnormality has occurred from the continuous use by the alarm, and thus it is possible to ensure the minimum safety level.

The process mode executing means 10h can set an extension time of the upper limit of the period of continual use of the appliance according to the identification code of the alarm installation signal.

With such a configuration, when the alarm installation signal is acquired, the upper limit of the permissible period of continual use that is the use condition is set on the basis of the extending time set according to the identification code assigned according to the types of the alarms. Accordingly, it is possible to set the appropriate appliance use condition according to the safety level in the home, and thus it is possible to ensure convenience and safety when using the appliance.

As described above, the control circuit 10 may discriminate the appliance or the specific event from the flow rate pattern measured by the flow rate measuring means 17, and may output the appliance information to which the identification code is assigned at the time of specifying the appliance or the event which has not hitherto occurred. Accordingly, the flow rate measured by the flow rate measuring means 17, for example, a periodically measured momentary flow rate is stored in a time series, an appliance or specific event is discriminated on the basis of the flow rate pattern in a predetermined period, it is determined that a new appliance has been introduced or an event different from the normal use has occurred when the appliance or event cannot specified, the appliance information to which the identification code is assigned is output, the appliance information is reported to the center side 15 through the communication means 11a. Accordingly, it is possible to securely interpret the installation situation of the gas appliance used in the home for each customer, the breakdown of the appliance, the occurrence of the abnormality on the center side 15, it is possible to centrally perform the overall management of the events related to the gas appliance for each customer in a 24-hour system, and thus it is possible to perform the secure and safe management of the appliances.

The control circuit 10 outputs appliance information to which an identification code representing that a new appliance has been installed or a specific event has occurred, when a new flow rate pattern is obtained a plurality of times. Accordingly, the introduction of the new appliance or the occurrence of the specific event is discriminated by the appearance of the flow rate patterns a plurality of times. Accordingly, it is possible to perform discrimination with a high probability, and thus it is possible to manage the appliances with little error.

As described above, according to the embodiment, the wireless module 11a which can communicate with the base station by selecting the communication channel using the wireless communication means other than the telephone line, and the wireless module 11b which can receive the appliance information from the home safety device 25 are integrally assembled with the control circuit board 10a having the measurement function and the cutoff function in the gas meter 2. Accordingly, the communication with the base station 14 can be performed only by installing the gas meter 2 without using the telephone line, the communication with the base station 14 can be smoothly performed irrespective of the situation of congested lines, the alarm installation information or the various kinds of appliance information acquired by the gas meter 2 can be promptly and accurately transmitted to the base station 14, and the various processes based on the instruction from the base station 14 can be accurately performed. In addition, the safety information from the home safety device 25 can be received and surely transmitted to the other party according to the information, it is possible to eliminate inconvenience that the communication with the base station 14 (monitoring center 15) due to the congestion of the telephone line as hitherto, and the various kinds of safety information generated in the home can be surely acquired in real time,

The acquired safety information is discriminated, and when the information is the safety information related to the gas cutoff function, the cutoff valve 2c is operated through the control circuit 10, and the process mode predetermined according to the other safety information is performed. For example, when the report destination is changed according to the safety information, the communication channel is selected and the information is transmitted to an appropriate other party. The gas meter 2 having such flow rate measuring function and cutoff function is used as the information relay. Accordingly, it is possible to reasonably ensure the safety function in the home and to promote the wide use of the safety system.

The wide area communication wireless module 11a which can communicate with the base station 14 in a carrier-direct manner and the area communication wireless module 11b which can communication within a predetermined range using the specific low power wireless communication frequency band are integrally configured with the control circuit board 10a, the information transmission is performed with respect to the base station 14 by the communication line other than the telephone line, and the information transmission is performed with respect to the home safety device 25 in the specific low power wireless communication frequency band. Accordingly, the safety information generated in the home can be surely acquired in real time, it is possible to accurately perform the ensuring of safety based on the meter's own cutoff function based on the acquired information, and perform the information transmission to the report destination according to the acquired information, the gas meter having the flow rate measuring function and the cutoff function is used as the information relay, it is possible to reasonably ensure the safety function in the home and to promote the wide use of the safety system.

It is possible to communicate with the specific terminal device 12 such as the television and the mobile phone using the area communication wireless module 11b built in the gas meter 2, it is possible to transmit the safety information generated in the home, it is possible to display the abnormal situation detected by the various alarms on the screen of the television or the mobile phone, and thus it is possible to bring caution to the customer's attention.

The gas meter 2 is provided with the identification code discriminating means 10f for classifying the safety information transmitted from the home safety device 25 into the information for ensuring the safety using the cutoff function of the gas meter 2, for example, the safety information from the fire alarm 22 or the CO sensor 23, and the other information, for example, crime prevention information from the invasion sensor or window open/close sensor 24. Accordingly, the safety can be ensured efficiently using the cutoff function of the gas meter 2, the gas meter 2 which is necessarily installed in the typical home can be used as the information relay, and it is possible to build the reasonable safety system.

The various embodiments of the invention have been described above, the invention is not limited to the configurations described in the embodiments, and modifications and applications made by those skilled in the art on the basis of the description of the specification and the known techniques are prescribed by the invention and included in the scope of requesting protection.

The present invention contains subject matter related to Japanese Patent Application No. 2007-204329 filed on August 6, 2007 and Japanese Patent Application No. 2008-045143 filed on February 26, 2008, the entire contents of which are incorporated herein by reference.

### Industrial Applicability

As described above, according to the invention, it is possible to appropriately cope with new events under the use circumstance of the flow rate measuring apparatus.

In addition, according to the gas appliance monitoring apparatus, the gas meter having the gas flow rate measuring function and the cutoff function is provided therein with the wireless module receiving the safety information from the home safety device. Accordingly, the safety is ensured by operating the gas cutoff function according to the safety information, and the gas appliance monitoring apparatus can be applied to various meters other than gas by the information relaying function of selecting the communication channel and transmitting information to the necessary other party.

## Claims

1. A flow rate measuring apparatus comprising:
a flow rate measuring unit that measures a flow rate of a fluid flowing in a flow path;
a new event detecting unit that detects when a new event, which has not occurred in previous use circumstance in a use circumstance of a fluid, by using a flow rate pattern of the flow rate measured by the flow rate measuring unit; and
a transmission unit that transmits a new event signal representing the new event detected by the new event detecting unit to an external reception apparatus.

2. The flow rate measuring apparatus according to Claim 1, wherein the new event detecting unit detects as the new event that a new appliance which is an appliance using a fluid has been introduced.

3. The flow rate measuring apparatus according to Claim 2, wherein the new event detecting unit detects that the new appliance which is the appliance using the fluid has been introduced when a new flow rate pattern is obtained a plurality of times.

4. The flow rate measuring apparatus according to Claim 3, wherein the new event detecting unit detects that the new appliance which is the appliance using the fluid has been introduced when the new flow rate pattern is continuously obtained a plurality of times.

5. The flow rate measuring apparatus according to Claim 3, wherein the new event detecting unit detects that the new appliance which is the appliance using the fluid has been introduced when the new flow rate pattern is discontinuously obtained a plurality of times.

6. The flow rate measuring apparatus according to Claim 1, wherein the new event detecting unit detects an abnormal use of an appliance using a fluid as the new event.

7. The flow rate measuring apparatus according to Claim 6, wherein the new event detecting unit detects the abnormal use of the appliance using the fluid as the new event when the flow rate pattern of the abnormal use is obtained a plurality of times.

8. The flow rate measuring apparatus according to Claim 7, wherein the new event detecting unit detects the abnormal use of the appliance using the fluid as the new event when the flow rate pattern of the abnormal use is continuously obtained a plurality of times.

9. The flow rate measuring apparatus according to Claim 7, wherein the new event detecting unit detects the abnormal use of the appliance using the fluid as the new event when the flow rate pattern of the abnormal use is discontinuously obtained a plurality times.

10. A communication system configured by connecting the flow rate measuring apparatus and the reception apparatus according to any one of Claims 1 to 9 to each other through a network.

11. The communication system according to Claim 10, further comprising a CO sensor that detects CO,
wherein the flow rate measuring apparatus is provided with a reception unit that receives a CO detection signal from the CO sensor, and
wherein the new event detecting unit generates the new event signal when combination between a flow rate pattern of a specific appliance and the CO detection ON-signal is obtained a plurality of times.

12. A flow rate measuring method comprising the steps of:
measuring a flow rate of a fluid flowing in a flow path;
detecting when there is a new event, which has not occurred in previous use circumstance in a use circumstance of a fluid, by using a flow rate pattern of the measured flow rate; and
transmitting a new event signal representing the new event to an external apparatus.

13. A flow rate measuring program for causing a computer controlling a flow rate measuring apparatus to execute the following steps:
measuring a flow rate of a fluid flowing in a flow path;
detecting when there is a new event, which has not occurred in previous use circumstance in a use circumstance of a fluid, by using a flow rate pattern of the measured flow rate; and
transmitting a new event signal representing the new event to an external apparatus.

14. A fluid supply system using the flow rate measuring apparatus, the communication system, the flow rate measuring method, or the flow rate measuring program according to any one of Claims 1 to 13.

15. A gas appliance monitoring apparatus which monitors a use circumstance by discriminating a gas appliance connected to a pipe passing through a gas meter and is capable of communicating with an alarm,
wherein the gas meter includes flow rate measuring means for measuring a gas flow rate, a gas cutoff valve that cuts a gas flow path at an abnormal time, a control circuit that performs a predetermined process on the basis of the measurement result of the flow rate measuring means and outputs flow rate information or appliance information, alarm installation information acquiring means for acquiring installation information of various alarms, and communication means for transmitting the flow rate information of the control unit, the appliance information, or the installation information of the alarm installation information acquiring means to the outside, and
wherein the communication means assigns and transmits an identification code classified according to the appliance information when the control circuit outputs new appliance information, and assigns and transmits an identification code classified according to the installation information output from the alarm installation information acquiring means.

16. The gas appliance monitoring apparatus according to Claim 15, wherein the alarm installation information acquiring means is provided with notification means for giving notices on the basis of inspection period notice information received through communication means.

17. The gas appliance monitoring apparatus according to Claim 15 or 16, wherein the alarm installation information acquiring means outputs a signal for varying a notification method according to the inspection period notice information, and restricts a period of continual use of the appliance, when a completion signal of an inspection work is not input even when a inspection expiration period has elapsed.

18. The gas appliance monitoring apparatus according to Claim 15, wherein the control circuit is provided with process mode executing means for executing a predetermined process mode according to the installation information output from the alarm installation information acquiring means.

19. The gas appliance monitoring apparatus according to Claim 18, wherein the process mode executing means allows an upper limit of the period of continual use of the appliance to be extendable when there is an alarm installation signal.

20. The gas appliance monitoring apparatus according to Claim 19, wherein the process mode executing means allows the upper limit of the period of continual use of the appliance to be further extendable when there are a plurality of alarm installation signals.

21. The gas appliance monitoring apparatus according to Claim 18 or 19, wherein the process mode executing means sets an extension time of the upper limit of the period of continual use of the appliance according to the identification code of the alarm installation signal.

22. The gas appliance monitoring apparatus according to Claim 15, wherein the control circuit discriminates an appliance or a specific event from the flow rate pattern measured by the flow rate measuring means, and outputs the appliance information to which the identification code is assigned at the time of specifying an appliance or an event which has not hitherto occurred.
